# FASCICULE DE BREVET EUROPEEN

(11) **EP 2 142 004 B1**
(45) Date de publication et mention de la délivrance du brevet: **06.01.2016**
(21) Numéro de dépôt: 08805708.8
(22) Date de dépôt: 25.04.2008
(51) Int. Cl.: A22C 11/00, A22C 11/10

(54) **DISPOSITIF DE MISE EN PORTIONS AVEC PINCES ET LAME DE COUPE**
PORTIONIERUNGSVORRICHTUNG MIT KLEMMEN UND EINER SCHNEIDEKLINGE
PORTIONING DEVICE INCLUDING CLAMPS AND A CUTTING BLADE

(30) Priorité: 02.05.2007 FR 0703162
(43) Date de publication de la demande: 13.01.2010
(73) Titulaire: Marel France, 56150 Baud (FR)
(72) Inventeur: LE PABIC, Fabrice, 56330 Camors (FR)
(74) Mandataire: Novagraaf Technologies
(86) Numéro de dépôt international: PCT/FR2008/050754
(87) Numéro de publication internationale: WO 2008/155491

(56) Documents cités:
- EP-A- 0 239 144
- EP-A- 0 247 545
- EP-A- 1 042 957
- EP-A- 1 767 096
- US-A- 5 709 600

## Description

La présente invention concerne un dispositif de mise en portions d'un boudin continu pour la réalisation de portions individuelles, et plus particulièrement un dispositif de mise en portions comprenant au moins une paire de pinces associée à une lame de coupe, notamment pour la réalisation de saucisses à partir d'un boudin continu constitué d'un hachis de viande ou poisson et/ou légumes, recouvert d'une peau ou enveloppe,

Il est connu, notamment par les documents EP 0 247 545 et EP 1 434 490, des dispositifs de mise en portions pour la fabrication de produits de type saucisses qui comprennent une paire de pinces opposées aptes à être déplacées l'une vers l'autre par des moyens d'actionnement d'une position ouverte vers une position fermée afin de pincer le boudin, et des moyens de coupe comprenant une lame associée à la paire de pinces, apte à être actionnée par des moyens d'actionnement pour couper le boudin lorsque les pinces sont en position fermée. Chaque pince comprend une plaque munie en extrémité d'un bord avant de pincement, sensiblement en forme de V, les deux pinces étant décalées l'une par rapport à l'autre de sorte que, lors de leur déplacement vers la position fermée, les plaques se chevauchent à la manière d'une cisaille, et forment par leur bord avant un passage ou diaphragme dont la section diminue progressivement. Les deux pinces sont disposées et déplacées de sorte qu'un passage subsiste dans la position fermée. La lame peut être montée sur l'une des deux pinces et être actionnée par un vérin pour découper du boudin juste en amont ou en aval des plaques.

Ce système de pinces assure un pincement progressif autour du boudin qui limite les risques de déchirement de son enveloppe. Toutefois, dans le cas de la fabrication de saucisses à partir d'un boudin obtenu par coextrusion de l'enveloppe et d'un produit alimentaire, les efforts de cisaillement appliqués par les pinces sur l'enveloppe venant d'être formée, par exemple par gélification, peuvent s'avérer trop importants, et entraîner une rupture de l'enveloppe. Par ailleurs, la coupe étant réalisée juste en amont ou en aval des pinces, le produit alimentaire a tendance à sortir de l'enveloppe par l'extrémité de la saucisse formée du côté de la lame.

Le but de la présente invention est de proposer un dispositif de mise en portions palliant les inconvénients précités, qui permet d'obtenir une coupe nette et précise des portions, en particulier dans le cas de saucisses ayant une enveloppe coextrudée.

A cet effet, la présente invention a pour objet un dispositif de mise en portions d'un boudin continu pour la réalisation de portions, selon la revendication 1, en particulier de saucisses, comprenant
- des moyens de pincement comportant au moins une paire de pinces opposées aptes à être déplacées l'une vers l'autre par des premiers moyens d'actionnement d'une position ouverte vers une position fermée pour pincer le boudin, chaque pince de la paire comprenant au moins une plaque munie en extrémité d'un bord avant de pincement, par exemple sensiblement en forme de V, les deux pinces étant décalées l'une par rapport à l'autre de sorte que, lors de leur déplacement vers la position fermée, les plaques se chevauchent en cisaille et forment par leur bord avant un passage ou diaphragme dont la section diminue progressivement, ledit passage ayant une section minimale non nulle dans la position fermée des pinces, et
- des moyens de coupe comprenant au moins une lame associée à la paire de pinces, montée par exemple sur l'une desdites pinces, apte à être actionnée par des seconds moyens d'actionnement pour couper le boudin lorsque les pinces sont proches de leur position fermée ou dans leur position fermée,
caractérisé en ce que chaque pince de ladite paire comprend au moins une première plaque et une seconde plaque disposées de sorte que, lors du déplacement des pinces vers leur position fermée, les premières plaques et les secondes plaques forment respectivement par leur bord avant un premier passage et un second passage à section variable, ladite lame associée à ladite paire de pinces étant apte à être déplacée transversalement aux plaques entre le premier passage et le second passage pour couper le boudin.

Selon l'invention, dans le cas de la fabrication de saucisses à partir d'un boudin formé d'un produit alimentaire enveloppé dans une enveloppe, le système de pinces à double plaques permet de pincer progressivement le boudin continu et de chasser progressivement le produit alimentaire de l'enveloppe entre le premier passage et le second passage, appelés également premier et second diaphragmes, pour former entre ces deux derniers une portion aplatie, écrasée de section restreinte, éventuellement sensiblement sans produit alimentaire, la coupe étant ensuite réalisée au niveau de cette portion aplatie.

Selon une particularité, lesdites pinces sont disposées de sorte que leurs plaques soient positionnées en alternance dans la position fermée des pinces, deux plaques adjacentes n'appartenant pas à la même pince.

Selon l'invention, lesdits premiers moyens d'actionnement sont aptes à rapprocher et écarter les pinces selon un mouvement de va-et-vient à la fois dans la direction orthogonale et la direction parallèle à la direction de transport du boudin, la vitesse de déplacement des pinces étant sensiblement égale à la vitesse de transport du boudin lorsque les pinces sont en contact avec le boudin pour les opérations de pincement et de coupe, et variable en dehors des opérations de pincement et de coupe pour effectuer une mise en portions à longueur variable.

Avantageusement, les pinces de chaque paire sont montées rotatives sur deux disques tournants, de préférence autour d'axes sensiblement parallèles aux axes de rotation des disques tournants, et perpendiculaires à la direction de transport du boudin, les disques étant entraînés en rotation par au moins un moteur à vitesse variable. Avantageusement, la rotation de chaque disque tournant entraîne, via un système d'engrenage, la rotation en sens inverse de la ou des pinces montées sur celui-ci.

Selon un autre mode de réalisation, les pinces sont montées pivotantes l'une à l'autre autour d'un axe, les pinces étant aptes à être manoeuvrées par des cames entre leur position fermée et leur position ouverte.

Selon une particularité, la lame est montée pivotante entre les deux plaques d'une première pince, lesdits seconds moyens d'actionnement étant aptes à faire pivoter ladite lame entre une position rétractée et une position active de coupe.

Selon une autre particularité, la lame est sollicitée par des moyens de rappel élastiques vers sa position rétractée, les seconds moyens d'actionnement de la lame étant montés sur la deuxième pince de la paire. Lesdits seconds moyens d'actionnement comprennent avantageusement un doigt monté sur la partie supérieure de la deuxième pince et apte à venir en butée contre un bras pivotant sur laquelle la lame est montée pour manoeuvrer la lame vers sa position active à l'encontre des moyens de rappel élastiques.

Dans le cas de pinces montées pivotantes, la lame est avantageusement montée sur un bras pivotant apte à coopérer avec une came pour manoeuvrer la lame entre ses deux positions.

L'invention sera mieux comprise, et d'autres buts, détails, caractéristiques et avantages apparaîtront plus clairement au cours de la description explicative détaillée qui va suivre de deux modes de réalisation particuliers actuellement préférés de l'invention, en référence aux dessins schématique annexés sur lesquels :
- la figure 1 est une vue schématique en perspective d'un dispositif de mise en portions selon un premier mode de réalisation ;
- la figure 2 est une vue schématique agrandie en perspective des deux paires de pinces sur les disques tournants de la figure 1, les pinces d'une première paire arrivant en contact avec le boudin continu ;
- les figures 3 et 4 sont des vues analogues à la figure 4, à échelle réduite illustrant les pinces de la première paire dans des positions angulaires différentes, respectivement juste avant l'alignement des axes de rotation des pinces avec les axes de rotation des disques, puis lors de l'écartement des pinces l'une de l'autre ;

- la figure 5 est une vue schématique en perspective d'une pince ;
- la figure 6 est une vue en perspective agrandie de la première paire de pinces de la figure 3 ;
- la figure 7 est une vue en perspective et en coupe longitudinale de la paire de pinces de la figure 6, illustrant le montage pivotant de la lame sur la première pince ;
- la figure 8 est une vue en perspective de la première paire de pinces lorsque les axes de rotation des pinces et les axes de rotation des disques sont alignés, c'est-à-dire lorsque les passages ont atteint leur section minimale, la lame en position active ;
- la figure 9 est une vue schématique en perspective d'éléments constitutifs du dispositif de la figure 1, dont les disques tournants équipés des paires de pinces et le convoyeur de récupération des saucisses avec leur système d'entraînement respectif ;
- la figure 10 est une vue en perspective des deux disques tournants illustrant le système d'entraînement en rotation des deux disques tournants et des pinces ;
- la figure 11 est une vue schématique en perspective d'une paire de pinces d'un dispositif selon un deuxième mode de réalisation ; et,
- la figure 12 représente une vue schématique partielle en coupe des pinces selon la figure 11, en position fermée, la lame en position rétractée.

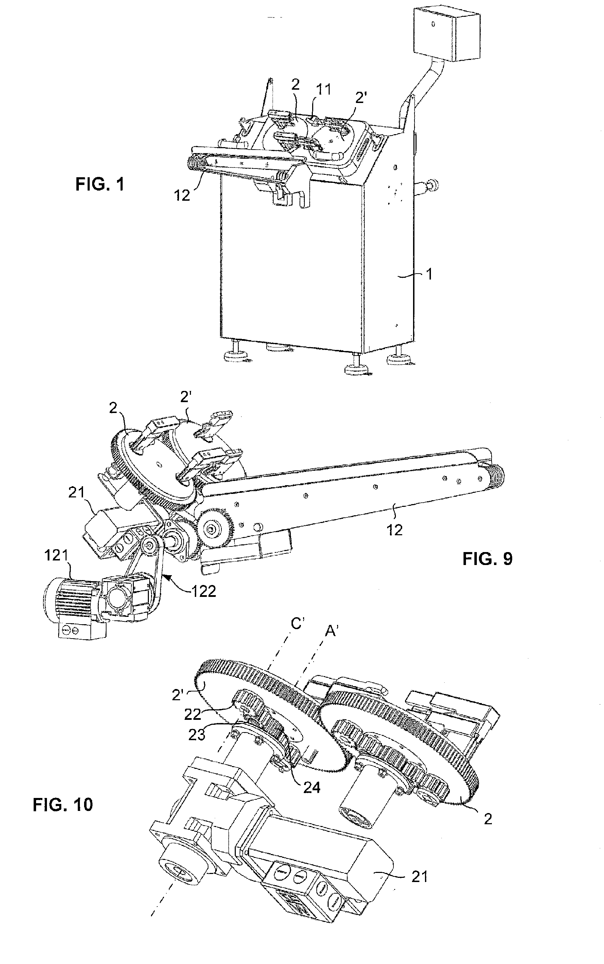

Les figures 1 à 10 illustrent un premier mode de réalisation d'un dispositif pour la fabrication de saucisses à partir d'un boudin continu formé d'un produit alimentaire recouvert d'une enveloppe. Le dispositif est avantageusement utilisé pour la mise en portions d'un boudin par coextrusion d'un produit alimentaire enduit d'une base de départ, comportant par exemple un ou plusieurs hydrocolloïdes, laquelle base est destinée à former la peau par gélification dans un bain en aval du dispositif de coextrusion.

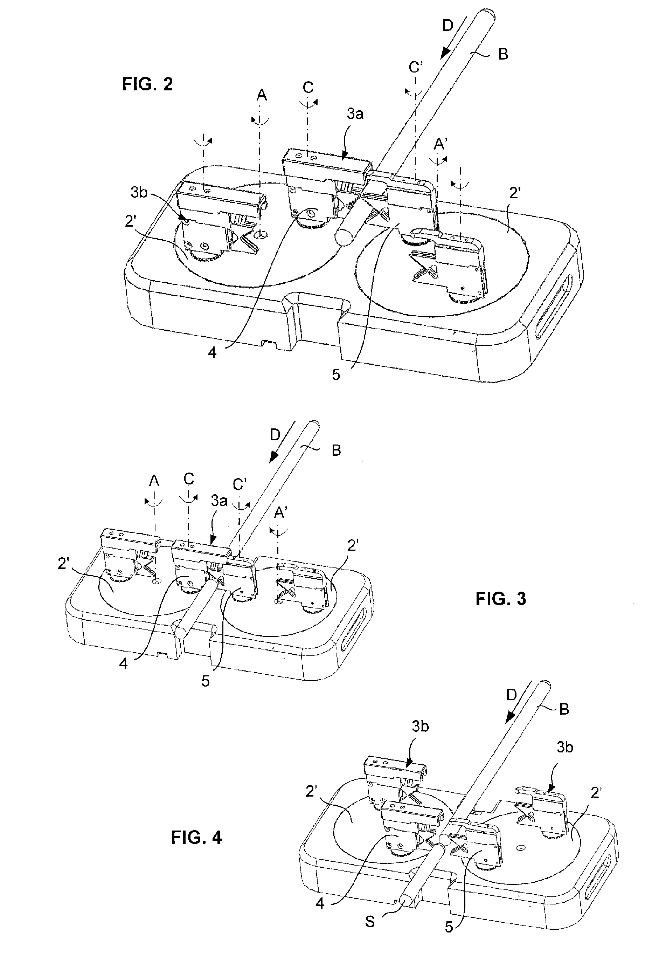

Dans ce premier mode de réalisation, les pinces de chaque paire sont montées rotatives sur des disques tournant pour être déplacées selon un mouvement de va-et-vient par translation circulaire. En référence en particulier aux figures 1 et 2, le dispositif comprend un châssis support 1 sur la partie supérieure duquel sont montés un premier disque tournant 2, d'axe de rotation A, et un deuxième disque tournant 2' d'axe de rotation A', les deux axes de rotation étant disposés parallèlement entre eux et sensiblement perpendiculairement à la direction d'avancement D du boudin à portionner. Une première paire 3a de pinces comprend une première pince 4 montée pivotante sur le premier disque tournant 2 autour d'un axe de rotation C disposé parallèlement à l'axe de rotation A du disque et à distance de ce dernier, et une deuxième pince 5 montée de manière analogue sur le deuxième disque 2' autour d'un axe de rotation C' parallèle à l'axe A'.

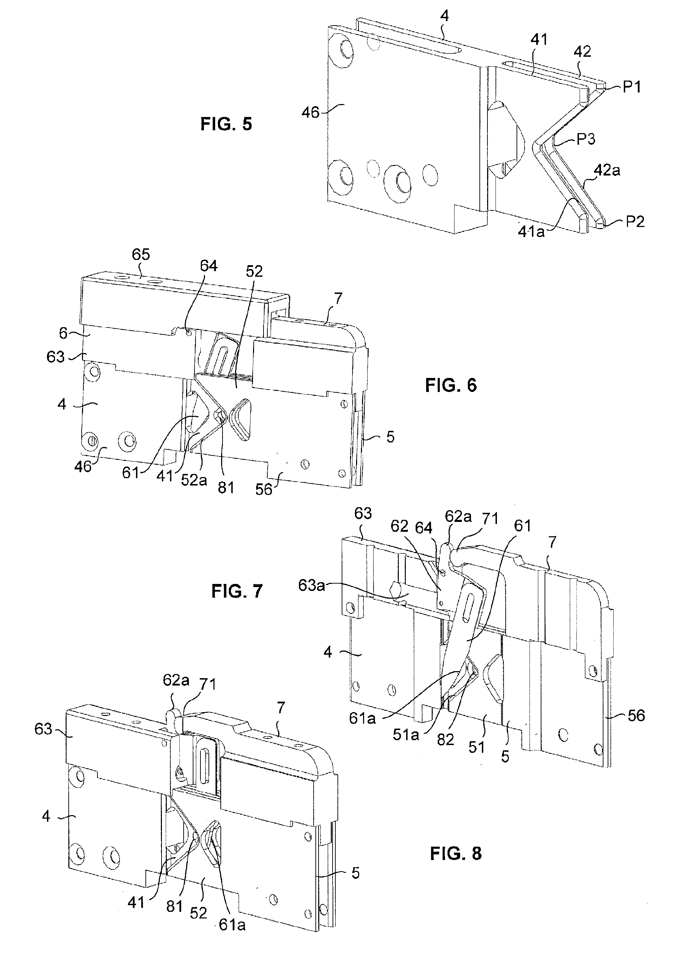

En référence à la figure 6, la première pince 4 comprend une première plaque 41 et une deuxième plaque 42 parallèles entre elles, et espacées l'une de l'autre. Chaque plaque présente à son extrémité avant une encoche qui définit un bord avant de pincement 41 a, 42a en forme générale de V, avec deux points extérieurs P1 et P2 de part et d'autre d'un point intérieur P3 en retrait. Les deux bords de pincement 41 a, 42a présentent des profils sensiblement identiques. En variante, ces profils peuvent être légèrement différents. Les deux plaques sont solidaires d'une partie de montage 46 par laquelle la pince est montée pivotante sur le premier disque, ses plaques étant disposées parallèlement à l'axe de rotation C. Les plaques et la partie de montage sont par exemple formées d'une seule et même pièce monobloc. La deuxième pince de la première paire est formée d'une pièce identique à celle de la première pièce. En référence aux figures 6 et 7, elle comprend deux plaques 51 et 52 avec des bords de pincement 51 a et 52a, et une partie de montage 56.

Tel que représenté sur la figure 2, les disques sont entraînés en rotation autour de leur axe A et A' des directions inverses, de sorte que les pinces se déplacent dans la direction de transport D du boudin lorsqu'elles sont en contact avec ce dernier, et à la même vitesse que celle du boudin, et les pinces sont entraînées en rotation sur les disques autour de leur axe C et C'de manière à rester disposées constamment perpendiculaires à la direction de transport D du boudin, et parallèles entre elles, avec leur bord avant en vis-à-vis.

En référence aux figures 6 et 7, la première pince 4 est équipée du système de coupe 6. Le système de coupe comprend une lame plane 61 montée de manière amovible sur un bras 62, ledit bras étant monté pivotant sur un support 63 autour d'un axe de rotation 64 perpendiculaire aux plaques. Le support est assemblé sur le dessus de la partie de montage de la première pince, la lame étant disposée entre les deux plaques parallèlement à ces dernières avec son bord de coupe 62a orienté vers l'extérieur. La lame est plus proche de la première plaque et peut être placée contre cette dernière. La lame est sollicitée élastiquement dans une position rétractée par un ressort de traction (non représenté), logé dans un logement 63a et relié par ses extrémités au bras 62 et au fond du logement. Dans cette position rétractée illustrée aux figures 6 et 7, la lame est disposée entre les deux plaques, en retrait par rapport à leur bord de pincement 41 a, 42a. Du côté de son axe de rotation 64 opposé au point de fixation du ressort, le bras se prolonge en dehors de son support 63, par un pion 62a apte à coopérer avec l'extrémité libre 71 d'un doigt d'actionnement 7 monté sur la deuxième pince 5 pour faire pivoter la lame à l'encontre du ressort vers une position active illustrée à la figure 8. Dans cette position active, le bord de coupe 61a de la lame est disposée au-delà des points intérieurs P3 des bords avant de pincement des plaques 41, 42, 51, 52. Le doigt d'actionnement est monté sur la partie supérieure de la deuxième pince 5 et s'étendant au dessus des deux plaques 51, 52, avec son extrémité libre 71 disposée à distance et sensiblement à l'aplomb des points extérieurs P1, P2 des bords de pincement 51a et 52a. La première pince est équipée une pièce de guidage 65, formée d'un rail 65 de section transversale en U inversé monté sur le support 63, qui s'étend au dessus des plaques 41, 42 pour recevoir et guider le doigt lors du rapprochement des deux pinces pour pincer et couper le boudin.

La figure 2 illustre la position angulaire des disques dans laquelle les deux pinces de la première paire viennent en contact avec le boudin B à portionner. Tel qu'illustré sur la figure 1, le dispositif comprend avantageusement en entrée un système de guidage, formé par exemple de deux rouleaux 11 disposé en V, pour guider entre les deux disques le boudin provenant du dispositif de coextrusion. A partir de cette position angulaire des disques, la première plaque 51 de la deuxième pince vient s'intercaler entre les deux plaques 41, 42 de la première pince, et la deuxième plaque 52 de la deuxième pince vient se positionner devant la première plaque 41 de la première pince. Le bord avant 41a de la première plaque de la première pince et le bord avant 52a de la deuxième plaque de la deuxième pince forme un premier passage ou diaphragme 81 (figure 8) dont la section diminue progressivement, et le bord avant 42a de la deuxième plaque de la première pince et le bord avant 51a de la première plaque de la deuxième pince forme un deuxième diaphragme 82 (figure 7) dont la section diminue progressivement. Le boudin est ainsi progressivement écrasé entre les deux diaphragmes 81 et 82. Dans la position illustrée à la figure 3, le doigt d'actionnement 7 vient en appui contre le pion. De cette position de la figure 3 à celle de la figure 8, dans laquelle les axes C et C' des pinces sont alignés avec les axes A et A' des disques, le doigt en appui contre le pion déplace progressivement la lame entre les deuxièmes plaques 42 et 52 des pinces, de sa position rétractée vers sa positon active, son bord de coupe 61a se déplaçant entre les diaphragmes, au-delà des points intérieurs P3 des plaques 51 et 52 de la deuxième pince pour couper la partie écrasée du boudin. A partir de cette position illustrée à la figure 8, les pinces s'écartent ensuite l'une de l'autre, la lame revenant dans sa position rétractée sous l'effet du rappel élastique du ressort. Les saucisses S venant d'être découpées sont ensuite récupérées sur le brin supérieur d'un convoyeur 12 à bande sans fin, entraîné par un moteur 121, via un système de poulies, de courroie et d'engrenages 122 tel qu'illustré schématiquement à la figure 9.

Tel qu'illustré sur les figures, les disques tournant peuvent comprendre une deuxième paire 3b de pinces. Sur chaque disque, les pinces sont disposées symétriquement de part et d'autre de l'axe de rotation du disque.

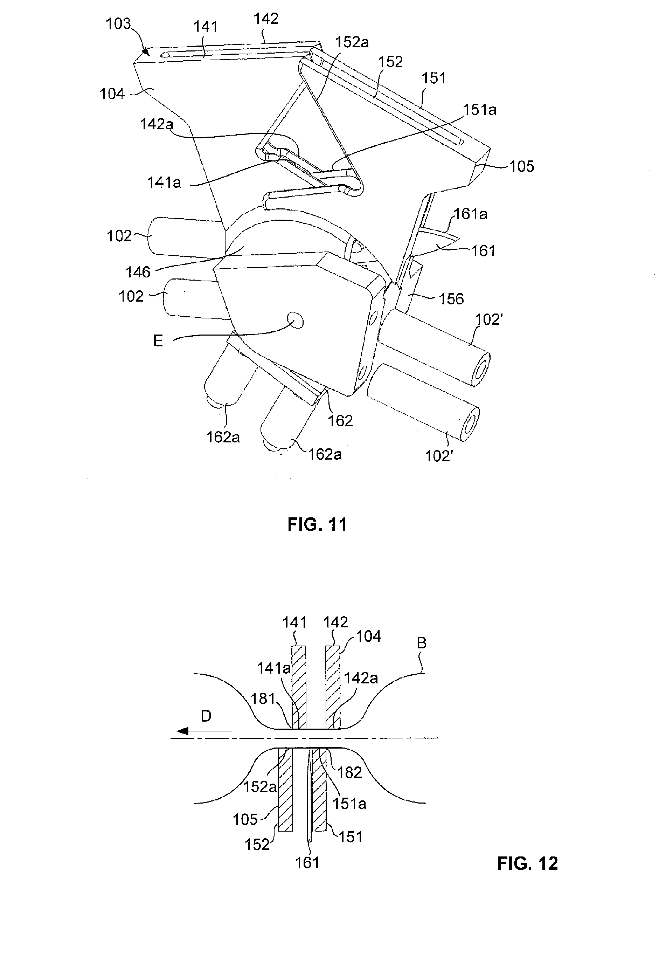

Comme indiqué précédemment, les disques 2 et 2' sont entrainés en rotation de sorte que les pinces se déplacent à la même vitesse que la vitesse de transport du boudin lorsque les pinces sont en contact avec le boudin. En dehors de ce secteur angulaire sur lequel les pinces sont en contact avec les pinces, la vitesse de rotation des disques peut être augmentée ou réduite en fonction de la longueur de saucisses souhaitée. Le système d'entrainement des disques et des pinces est illustré sur les figures 10 et 11. Le deuxième disque 2' est entraîné en rotation par un moteur 21 autour de son axe de rotation A'. Le moteur est par exemple un moteur sans balai, appelé classiquement moteur "brushless", commandé par un variateur programmé pour faire varier la vitesse de rotation du disque en fonction de la longueur de saucisses souhaitée. Le bord périphérique du deuxième disque est muni de dents qui viennent s'engrener avec celles du premier disque pour entrainer en rotation ce dernier en sens inverse, autour de son axe A'. Chaque pince est montée sur un axe qui traverse le disque de part en part, et qui porte de manière fixe en partie intérieure un pignon 22. Ce pignon engrène avec un pignon intermédiaire 23 monté tournant sur la face inférieure du disque. Ce pignon intermédiaire engrène avec un pignon axial 24 qui est monté fixe sur le châssis et qui entoure l'axe de rotation du disque. Ainsi, la rotation du deuxième disque 2' dans un sens par le moteur 21 entraine la rotation du premier disque 2 en sens inverse, ainsi que la rotation de chaque pince dans le sens inverse au sens de rotation du disque sur lequel elle est montée.

La figure 9 illustre une paire 103 de pinces selon un deuxième mode de réalisation, dans lequel les pinces 104, 105 comprennent comme précédemment chacune deux plaques 141, 142 et 151, 152 munies d'un bord de pincement 141 a, 142a et 151 a, 152a globalement en forme de V, les deux pinces étant cette fois-ci assemblées l'une à l'autre par leur partie de montage 146, 156 de manière pivotante autour d'un axe E perpendiculaire aux plaques.

Plusieurs paires de pinces sont par exemple montées en un arrangement en bande sans fin parallèlement à la direction de transport du boudin B. Les paires de pinces avancent sensiblement à la même vitesse que la vitesse de transport du boudin, l'écartement entre deux paires de pinces successives correspondant à la longueur de saucisses souhaitée.

La partie de montage de chaque pince est équipée de deux rouleaux 102, 102' montés fou, les rouleaux étant aptes à coopérer avec des cames (non représentées), par exemple sous la forme de rails de guidage passant entre les deux rouleaux, pour manoeuvrer les pinces entre leur position ouverte et leur position fermée illustrée à la figure 12. La lame de coupe 161 est assemblée à un bras 162 monté pivotant autour de l'axe E, et équipé à son extrémité de deux rouleaux 162a, lesdits rouleaux coopérant avec des cames mécaniques pour déplacer la lame entre sa position active de coupe et sa position rétractée illustrée à la figure 11, dans laquelle la lame est entre les plaques de la deuxième pince 105, son bord de coupe 161a en retrait par rapport aux bords avant 151 a, 152a.

Comme précédemment, le boudin est progressivement écrasé entre les deux diaphragmes 181 et 182, formés respectivement par le bord avant 141 a de la première plaque de la première pince et le bord avant 152a de la deuxième plaque de la deuxième pince, et le bord avant 142a de la deuxième plaque de la première pince et le bord avant 151a de la première plaque de la deuxième pince, la coupe étant réalisée entre les premières plaques 141 et 151.

Bien que l'invention ait été décrite en liaison avec deux modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Dispositif de mise en portions d'un boudin continu pour la réalisation de portions, en particulier de saucisses, comprenant
- des moyens de pincement comportant au moins une paire de pinces (4, 5; 104, 105) opposées aptes à être déplacées l'une vers l'autre par des premiers moyens d'actionnement (2, 2') d'une position ouverte vers une position fermée pour pincer le boudin, chaque pince de la paire comprenant au moins une plaque (41, 42; 51, 52; 141, 142; 151, 152) munie en extrémité d'un bord avant de pincement, les deux pinces étant décalées l'une par rapport à l'autre de sorte que, lors de leur déplacement vers la position fermée, les plaques forment par leur bord avant un passage ou diaphragme dont la section diminue progressivement, et
- des moyens de coupe comprenant au moins une lame (61, 161) associée à la paire de pinces apte à être actionnée par des seconds moyens d'actionnement (7) pour couper le boudin, chaque pince (4, 5 ; 104, 105) de ladite paire (3a, 3b) comprenant au moins une première plaque (41, 51 ; 141, 151) et une seconde plaque (42, 52 ; 142, 152) disposées de sorte que, lors du déplacement des pinces vers leur position fermée, les premières plaques et les secondes plaques forment respectivement par leur bord avant (41 a, 51 a; 141a, 151a; 42a, 52a; 142a, 152a) un premier passage (81, 181) et un second passage (82, 182) à section variable, ladite lame (61, 161) associée à ladite paire de pinces étant apte à être déplacée transversalement aux plaques entre le premier passage et le second passage pour couper le boudin.
**caractérisé en ce que** la vitesse de déplacement des pinces est sensiblement égale à la vitesse de transport du boudin lorsque les pinces sont en contact avec le boudin pour les opérations de pincement et de coupe.

2. Dispositif de mise en portions selon la revendication 1, **caractérisé en ce que** lesdites pinces (4, 5 ; 104, 105) sont disposées de sorte que leurs plaques (41, 42, 51, 52 ; 141, 151, 142, 152) soient positionnées en alternance dans la position fermée des pinces.

3. Dispositif selon la revendication 1 ou 2, **caractérisé en ce que** lesdits premiers moyens d'actionnement (2, 2') sont aptes à rapprocher et écarter les pinces (4, 5) selon un mouvement de va-et-vient à la fois dans la direction orthogonale et la direction parallèle à la direction de transport (D) du boudin (B), la vitesse de déplacement des pinces étant sensiblement égale à la vitesse de transport du boudin lorsque les pinces sont en contact avec le boudin pour les opérations de pincement et de coupe, et variable en dehors des opérations de pincement et de coupe.

4. Dispositif selon la revendication 3, **caractérisé en ce que** les pinces (4, 5) de chaque paire sont montées rotatives sur deux disques tournants (2, 2') autour d'axe (C, C') sensiblement parallèles aux axes de rotation (A, A') des disques tournants, et perpendiculaires à la direction de transport (D) du boudin, les disques étant entraînés en rotation par au moins un moteur (21) à vitesse variable.

5. Dispositif selon la revendication 4, **caractérisé en ce que** la rotation de chaque disque tournant (2, 2') entraîne, via un système d'engrenage (22, 23, 24), la rotation en sens inverse de la ou des pinces montées sur celui-ci.

6. Dispositif selon la revendication 1 ou 2, **caractérisé en ce que** les pinces (104, 105) sont montées pivotantes l'une à l'autre autour d'un axe (E), les pinces étant aptes à être manoeuvrées par des cames entre leur position fermée et leur position ouverte.

7. Dispositif selon l'une des revendications 1 à 6, **caractérisé en ce que** la lame (61, 161) est montée pivotante entre les deux plaques d'une première pince, lesdits seconds moyens d'actionnement étant aptes à faire pivoter ladite lame entre une position rétractée et une position active de coupe.

8. Dispositif selon la revendication 7, **caractérisé en ce que** la lame (61) est sollicitée par des moyens de rappel élastiques vers sa position rétractée, les seconds moyens d'actionnement (7) de la lame étant montés sur la deuxième pince de la paire.

9. Dispositif selon la revendication 8, **caractérisé en ce que** lesdits seconds moyens d'actionnement comprennent un doigt (7) monté sur la partie supérieure de la deuxième pince et apte à venir en butée contre un bras pivotant (62) sur laquelle la lame (61) est montée pour manoeuvrer la lame vers sa position active à l'encontre des moyens de rappel élastiques.

10. Dispositif selon les revendications 6 et 7, **caractérisé en ce que** la lame (161) est montée sur un bras pivotant (162) apte à coopérer avec une came pour manoeuvrer la lame entre ses deux positions.

## Patentansprüche

1. Vorrichtung zur Portionierung einer kontinuierlichen Schlauchrolle zur Herstellung von Portionen, insbesondere von Würsten, umfassend:
- Klemmhilfsmittel, umfassend mindestens ein gegenüberliegendes Klemmenpaar (4, 5; 104, 105), die geeignet sind, zueinander durch erste Betätigungsmittel (2, 2') von einer offenen Position in eine geschlossene Position zum Einklemmen der Schlauchrolle verschoben zu werden, wobei jede Klemme des Paars mindestens eine Platte (41, 42; 51, 52; 141, 142; 151, 152) umfasst, die am Ende mit einem vorderen Klemmrand versehen ist, wobei die beiden Klemmen zueinander versetzt sind, so dass bei ihrer Verschiebung in die geschlossene Position die Platten mit ihrem vorderen Rand einen Durchgang oder eine Membran bilden, deren Querschnitt progressiv abnimmt, und
- Schneidemittel, umfassend mindestens eine Schneideklinge (61, 161), die mit dem Klemmenpaar verbunden und geeignet ist, durch zweite Betätigungsmittel (7) betätigt zu werden, um die Schlauchrolle zu durchschneiden, wobei jede Klemme (4, 5; 104, 105) des Paars (3a, 3b) mindestens eine erste Platte (41, 51; 141, 151) und eine zweite Platte (42, 52; 142, 152) umfasst, die derart angeordnet sind, dass bei der Verschiebung der Klemmen in ihre geschlossene Position die ersten Platten und die zweiten Platten jeweils mit ihrem vorderen Rand (41a, 51a; 141a, 151a; 42a, 52a; 142a, 152a) einen ersten Durchgang (81, 181) und einen zweiten Durchgang (82, 182) mit variablem Querschnitt bilden, wobei die Schneideklinge (61, 161), die dem ersten Klemmenpaar zugeordnet ist, geeignet ist, quer zu den Platten zwischen dem ersten Durchgang und dem zweiten Durchgang verschoben zu werden, um die Schlauchrolle zu durchschneiden,
**dadurch gekennzeichnet, dass** die Verschiebegeschwindigkeit der Klemmen im Wesentlichen gleich der Transportgeschwindigkeit der Schlauchrollen ist, wenn die Klemmen mit der Schlauchrolle für die Vorgänge des Einklemmens und Durchschneidens in Kontakt sind.

2. Portioniervorrichtung nach Anspruch 1, **dadurch gekennzeichnet, dass** die Klemmen (4, 5; 104, 105) derart angeordnet sind, dass ihre Platten (41, 42, 51, 52; 141, 151, 142, 152) abwechselnd in der geschlossenen Position der Klemmen angeordnet sind.

3. Vorrichtung nach Anspruch 1 oder 2, **dadurch gekennzeichnet, dass** die ersten Betätigungsmittel (2, 2') geeignet sind, die Klemmen (4, 5) in einer Hin- und Herbewegung sowohl in die orthogonale Richtung als auch in die Richtung parallel zur Transportrichtung (D) der Schlauchrolle (B) einander anzunähern und voneinander zu entfernen, wobei die Verschiebegeschwindigkeit der Klemmen im Wesentlichen gleich der Transportgeschwindigkeit der Schlauchrolle ist, wenn die Klemmen mit der Schlauchrolle für die Vorgänge des Einklemmens und Durchschneidens in Kontakt sind, und außerhalb der Vorgänge des Einklemmens und Durchschneidens variabel ist.

4. Vorrichtung nach Anspruch 3, **dadurch gekennzeichnet, dass** die Klemmen (4, 5) jedes Paars drehbar auf zwei Drehscheiben (2, 2') um eine Achse (C, C') im Wesentlichen parallel zu den Drehachsen (A, A') der Drehscheiben und senkrecht auf die Transportrichtung (D) der Schlauchrolle montiert sind, wobei die Scheiben in Drehung durch mindestens einen Motor (21) mit regelbarer Drehzahl angetrieben werden.

5. Vorrichtung nach Anspruch 4, **dadurch gekennzeichnet, dass** die Drehung jeder Drehscheibe (2, 2') über ein Zahnradsystem (22, 23, 24) die Drehung der auf dieser montierten Klemme(n) in die umgekehrte Richtung bewirkt.

6. Vorrichtung nach Anspruch 1 oder 2, **dadurch gekennzeichnet, dass** die Klemmen (104, 105) schwenkbar zueinander um eine Achse (E) montiert sind, wobei die Klemmen geeignet sind, durch Nocken zwischen ihrer geschlossenen Position und ihrer offenen Position betätigt zu werden.

7. Vorrichtung nach einem der Ansprüche 1 bis 6, **dadurch gekennzeichnet, dass** die Schneideklinge (61, 161) schwenkbar zwischen den beiden Platten einer ersten Klemme montiert ist, wobei die zweiten Betätigungsmittel geeignet sind, die Schneideklinge zwischen einer eingezogenen Position und einer aktiven Schneideposition zu schwenken.

8. Vorrichtung nach Anspruch 7, **dadurch gekennzeichnet, dass** die Schneideklinge (61) durch elastische Rückstellmittel in ihre eingezogene Position gebracht wird, wobei die zweiten Betätigungsmittel (7) der Schneideklinge auf der zweiten Klemme des Paars montiert sind.

9. Vorrichtung nach Anspruch 8, **dadurch gekennzeichnet, dass** die zweiten Betätigungsmittel einen Finger (7) umfassen, der auf dem oberen Teil der zweiten Klemme montiert und geeignet ist, an einem Schwenkarm (62), auf dem die Schneideklinge (61) montiert ist, zum Anschlag zu gelangen, um die Schneideklinge in ihre aktive Position gegen die elastischen Rückstellmittel zu bringen.

10. Vorrichtung nach den Ansprüchen 6 und 7, **dadurch gekennzeichnet, dass** die Schneideklinge (161) auf einem Schwenkarm (162) montiert ist, der geeignet ist, mit einer Nocke zusammenzuwirken, um die Schneideklinge zwischen ihren beiden Positionen zu betätigen.

## Claims

1. Device for portioning a continuous strand in order to form portions, especially sausages, comprising
- pinching means comprising at least one pair of opposite pliers (4,5;104,105) able to be moved toward one another by the first actuation means (2,2') from an open position to a closed position in order to pinch the strand, with each plier of the pair comprising at least one plate (41,42;51,52;141,142;151,152) provided at the end with a front pinching edge, with the two pliers being shifted in relation to one another in such a way that, during their displacement towards the closed position, the plates form via their front edge a passage or diaphragm whose cross-section decreases progressively, and
- cutting means comprising at least one blade (61,161) associated to the pair of pliers able to be actuated by second actuation means (7) in order to cut the strand, each plier (4, 5; 104, 105) of said pair (3a, 3b) comprising at least a first plate (41, 51; 141, 151) and a second plate (42, 52; 142, 152) arranged in such a way that, during the displacement of the pliers towards their closed position, the first plates and the second plates form respectively via their front edge (41a, 51a; 141a, 151a; 42a, 52a; 142a, 152a) a first passage (81, 181) and a second passage (82, 182) with a variable cross-section, said blade (61, 161) associated to said pair of pliers being able to be moved transversally to the plates between the first passage and the second passage in order to cut the strand,
**characterised in that** the displacement speed of the pliers being substantially equal to the transport speed of the strand when the pliers are in contact with the strand for the pinching and cutting operations.

2. Device for portioning according to claim 1, **characterised in that** said pliers (4, 5; 104, 105) are arranged in such a way that the plates thereof (41, 42, 51, 52; 141, 151, 142, 152) are positioned in alternation in the closed position of the pliers.

3. Device according to claim 1 or 2, **characterised in that** said first actuation means (2, 2') are able to bring pliers (4, 5) closer together and further apart according to a back-and-forth movement, in the orthogonal direction as well as in the direction parallel to the transport direction (D) of the strand (B), the displacement speed of the pliers being substantially equal to the transport speed of the strand when the pliers are in contact with the strand for the pinching and cutting operations, and variable outside of the pinching and cutting operations.

4. Device according to claim 3, **characterised in that** the pliers (4, 5) of each pair are mounted in rotation on two rotatable discs (2, 2') around axis (C, C') substantially parallel to the axes of rotation (A, A') of the rotatable discs, and perpendicular to the transport direction (D) of the strand, with the discs being driven in rotation by at least one variable speed motor (21).

5. Device according to claim 4, **characterised in that** the rotation of each rotatable disc (2, 2') drives, via a gear system (22, 23, 24), the rotation in the opposite direction of the plier(s) mounted thereon.

6. Device according to claim 1 or 2, **characterised in that** the pliers (104, 105) are mounted pivoting in relation to each other around an axis (E), the pliers being able to be manoeuvred by cams between their closed position and their open position.

7. Device according to any of claims 1 to 6, **characterised in that** the blade (61, 161) is mounted pivoting between the two plates of a first plier, said second actuation means being able to pivot said blade between a retracted position and an active cutting position.

8. Device according to claim 7, **characterised in that** the blade (61) is solicited by elastic return means towards its retracted position, with the second actuation means (7) for actuating the blade being mounted on the second plier of the pair.

9. Device according to claim 8, **characterised in that** said second actuation means include a finger (7) mounted on the upper portion of the second plier and which is capable of abutting against a pivoting arm (62) whereon the blade (61) is mounted in order to manoeuvre the blade towards its active position against the elastic return means.

10. Device according to claims 6 and 7, **characterised in that** the blade (161) is mounted on a pivoting arm (162) able to cooperate with a cam in order to manoeuvre the blade between its two positions.
